Europäisches Patentamt

European Patent Office

Office européen des brevets

(11) Publication number: **0 339 720**

**A1**

## (12) EUROPEAN PATENT APPLICATION

(21) Application number: **89201000.0**

(22) Date of filing: **19.04.89**

(51) Int. Cl.⁴: **B60B 27/00**

(30) Priority: **27.04.88 IT 6738988**

(43) Date of publication of application:
**02.11.89 Bulletin 89/44**

(84) Designated Contracting States:
**DE FR GB SE**

(71) Applicant: **RIV-SKF OFFICINE DI VILLAR
PEROSA S.p.A**
**Via Mazzini 53**
**I-10123 Torino(IT)**

(72) Inventor: **Colanzi, Franco**
**Piazza Rivoli n. 7**
**I-10100 Torino(IT)**

(74) Representative: **Lotti, Giorgio**
**c/o Ing. Barzanò & Zanardo Milano S.p.A. Via
Cernaia 20**
**I-10122 Torino(IT)**

(54) Bearing-hub assembly for motor vehicle wheels.

(57) A bearing-hub assembly for motor vehicle
wheels consisting of an outer ring or rotating hub,
integral to the vehicle wheel and an inner element or
spindle, integral to the suspension; the bearing balls
are interposed between the outer ring and the inner
element in two flanked sets; a set of balls (13) is
directly inserted between the rear integral races (12)
of the hub (21) and of the spindle (10), whilst the
second set of balls (17) is inserted between the front
integral races (9) of the hub and of a ring (16)
inserted into the spindle; the front end (18) of the
spindle (10) presents a circumferential groove (19)
including a stop ring (20) for the ring (16) inserted on
the spindle against its axial unthreading seat.

EP 0 339 720 A1

# BEARING-HUB ASSEMBLY FOR MOTOR VEHICLE WHEELS

Subject of the invention is a bearing-hub assembly for motor vehicle wheels.

The bearings of the hubs of motor vehicle wheels are made of: an outer flanged ring working as a hub; two inner half rings of the wheel keyed with the suspension, and balls inserted between said half-rings and the outer ring or hub. However, said embodiment requires a precision processing of the spindle, as it holds the inner half rings of the bearing; furthermore, it requires the employment of a nut screwed on the threaded end of the spindle on which a screwing down load of several tons must be exerted to secure the various elements to one another and to restore the end float of the bearing during assembly.

Another solution is the one having the outer ring of the bearing as the integral element to the suspension and the inner ring as rotating shaft with the wheel. In such case, some of the balls of the bearing are directly assembled on the spindle and some on an inner ring which in turn is assembled on the spindle.

Said embodiment is extremely expensive as the spindle will have to be made of high quality material and processed with great precision, as it is the rotating element of the assembly. Purpose of the invention is to avoid the above mentioned inconveniences, and to propose a less expensive embodiment, easier to realize and assemble and offering at least equal reliability.

For these and other purposes which will be better appreciated as the description follows, the invention proposes a bearing-hub assembly for motor vehicle wheels comprising an outer ring or rotating hub, integral to the vehicle wheel and an inner element or spindle integral to the suspension; the bearing balls are interposed between the outer ring and the inner element in two flanked sets characterized in that a set of bearing balls is directly inserted between the rear integral races of the hub and of the spindle, whilst the second set is inserted between the front integral races of the hub and of a ring inserted into the spindle; the front end of the spindle presents a circumferential groove including a stop ring for the ring inserted on the spindle against its axial unthreading seat.

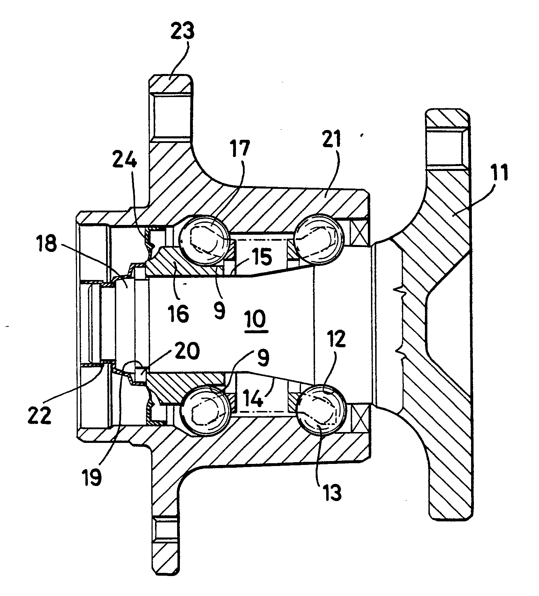

The description of the assembly now follows and reference is made to the enclosed drawing which illustrates the axial cutaway view of said assembly.

The spindle 10 has a flanged end 11 which is fastened to the suspension of the motor car.

The intermediate length of the spindle 10 is tapered 14 and holds a race 12 on which a first set of balls 13 are rolling, forming the bearing. The second intermediate length 15 of the spindle 10, on the contrary, is flat and on it a ring 16 is assembled; the second set of balls 17 rolls on the races 9 of said ring.

The end length 18 of the spindle has a circumferential groove 19, able to house a split stop ring, or two separate half rings 20, and obtained at the end of the rectilinear length 15.

A lid 22 may be connected by squeezing on the end walls 18 of the spindle; said lid operates as safety cover and seal against the unthreading of the stop ring 20 or, in substitution, of the two half rings having the same function. The outer ring of the bearing consists of the wheel hub 21 flanged in 23 to which the vehicle wheel is fastened.

After having assembled the bearing in the position indicated in the drawing, a preloading of a preset entity is exerted on the ring 16 to restore the end float.

The clear height of the groove 19 is measured keeping the preloading, and the stop ring or the two pertinent half rings are inserted in said groove, in a way that when removing the load on the ring 16 said ring remains in position pushed by said rings.

The seal of the bearing is then applied and finally the lid 22 is inserted on the end 18 of the spindle squeezing it to copy the surface of said spindle.

The lid 22 only performs a safety function regarding the stop ring and a retaining function in case said stop ring is substituted by two half rings.

## Claims

1) A bearing-hub assembly for motor vehicle wheels comprising an outer ring or rotating hub, integral to the vehicle wheel and an inner element or spindle integral to the suspension; the bearing balls are interposed between the outer ring and the inner element in two flanked sets wherein a set of bearing balls (13) is directly inserted between the rear integral races (12) of the hub (21) and of the spindle (10), whilst the second set (17) is inserted between the front integral races (9) of the hub and of a ring (16) inserted into the spindle; the front end (18) of the spindle (10) presents a circumferential groove (19) including a stop ring (20) for the ring (16) inserted on the spindle against its axial unthreading seat.

2) An assembly according to claim 1 wherein the stop ring (20) consists of one circlip or two half rings.

3) Assembly according to claim 2 wherein a cover lid (22) including the stop ring (20) or two half rings is squeezed on the end (18) of the spindle (10) extending from the bearing.

4) Assembly according to claim 1 wherein the first length of the spindle (10) is tapered, obtained in correspondence with the race (12) including the firt set of bearing balls (13); a second rectilinear length (15) having a constant section follows, and on said length the ring (16) is inserted including the second set of bearing balls (17).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 179 167 (LURA) * Column 1, line 65 - column 3, line 33; figures 1-3 * | 1-4 | B 60 B 27/00 |
| X | D.A. FOSTER: "Developments in wheel speed sensing", ABS Traction Control, SP-744, 29th February - 4th March 1988, pages 39-45 * Figures 3,4,8 * | 1,3,4 | |
| X | ATZ - AUTOMOBILTECHNISCHE ZEITSCHRIFT, vol. 90, no. 3, March 1988, page 116, Stuttgart, DE; "Wheel bearing unit with integrated ABS sensor" * Figure * | 1,3,4 | |
| A | DE-C- 838 706 (DEUTSCHE STAR KUGELHALTER) * Page 2, lines 64-74; figure 1 * | 1 | |

TECHNICAL FIELDS SEARCHED (Int. Cl.4)

B 60 B

The present search report has been drawn up for all claims

| Place of search | Date of completion of the search | Examiner |
|---|---|---|
| THE HAGUE | 08-08-1989 | AYITER I. |

EPO FORM 1503 03.82 (P0401)